# EUROPEAN PATENT APPLICATION

(11) **EP 3 296 007 A1**
(43) Date of publication of application: **21.03.2018**
(21) Application number: 16189308.6
(22) Date of filing: 16.09.2016
(51) Int. Cl.: B01D 46/06

(54) **DEVICE FOR JOINING BASKETS FOR BAG FILTERS**

(71) Applicant: Clean Air Europe Srl, 23892 Bulciago (LC) (IT)
(72) Inventor: MONTANELLI, Adriano, I-23892 Bulciago LC (IT)
(74) Representative: Marietti, Giuseppe

(57) **Abstract**

Device (1) for the coaxial joining of baskets (4, 4a) for bag filters or for the coaxial joining of an end basket (4a) with a Venturi (5), of the type with male-female coupling between open end flanges (2, 3), wherein one of the flanges (2) has a plurality of hook-shaped protruding fins (21) and the corresponding flange (3) has the same plurality of openings (31) for accommodating said fins (21), such that a reciprocal shift between the flanges (2, 3) is adapted to insert the hook-shaped part (21a) of the fins (21) under the other flange (3) at the insertion openings (31), characterized in that at least one of the surfaces (23a, 33a) facing one another of the flanges (2, 3) has several protruding bosses (25, 35) designed so as to urge the flanges in the axial sense of reciprocal removal during said reciprocal shift.

## Description

### Field of the Invention

The present invention relates to a device for the coaxial joining of baskets for bag filters. In particular, the device according to the present invention can be used for both the coaxial joining between two baskets and the coaxial joining of an end basket with a Venturi. For example, the device is used in filtering installations for treating fluids, typically gas, air, etc., for example before the latter are discharged in atmosphere.

Typically, air or gases from some industrial processes are conveyed into a bag filter such that the particles contained within the flow are caught by a plurality of filter elements (generally a fabric) usually named "filter bags". The bags extend along a main (height) direction and are sustained by a supporting structure. Each filter bag is coupled to a cage-shaped frame (bag-holder) extending through the whole length of the bag, forming a filter tube.

The bags are shaped as long pouches (a sort of sock) inside which the bag-holder frame is inserted. Air or gas to be treated is forced to flow into a gas-tight chamber in which a plurality of bags is housed. The air, passing through the bags, is filtered and, as it travels inside the bag, escapes from the gas-tight chamber at an end of the supporting frame generally closed by means of a Venturi. By means of the Venturi, upstreaming washing compressed air is further entered into the filter bags to remove the caught particles from the bags.

### Known previous art

Since filter bags can be rather long (even more than ten meters), the cage-shaped support is generally manufactured in shorter length sections to facilitate the transport thereof. A plurality of sections, generally named "baskets" or "supports", are connected one another to make up the bag-holder frame. The end part of the basket can be thus connected to a Venturi tube.

The joining of the various pieces for assembling each bag-holder frame is a critical operation during the implementation of a filtering installation, where there can be up to thousands of filter bags supported by as many frames.

Conventionally, baskets can be joined by interlocking the metal wires of which the basket structure is made or by constraining the ends of two baskets by means of metal rings combined one another. Such techniques make the assembling operations very long, heavy and often not easy to realize.

A solution for speeding the assembling of the various baskets is described in US8491688 in name of Peshina wherein each basket is provided with flanges at the ends thereof. One flange has arched portions radially extending inwards, the other flange has arched portions folded so that to radially extend outwards. By coaxially positioning the flanges and rotating a basket with respect to the other one, the portions of a flange overlap the portions of the other flange thus preventing the two baskets from axially moving.

However such a solution provides for the insertion of a locking tab (or pins or a ring) inside a slot provided between the flanges to prevent the baskets from rotating one with respect to another. Moreover, before the relative basket rotation is carried out, such a solution requires high precision in coaxially aligning the flanges such that they match up.

### Summary of the invention

Object of the present invention is to provide a device for joining baskets for bag filters able to simplify and speed up the assembling of bag-holder frames.

Further object of the present invention is to provide a device for joining baskets for bag filters by which two baskets can be constrained one another or an end basket can be constrained to a Venturi, quickly and without the use of tools.

These and further objects are solved by the present invention by means of a device according to claim 1 and the respective dependent claims.

In particular, the device according to the present invention is adapted for the coaxial joining of baskets for bag filters or for the coaxial joining of an end basket with a Venturi. Such a device is of the type with male-female coupling between open end flanges. The flanges are fastened at the ends of each basket, for example they can be welded to the metal wires of which the basket is typically made.

One of the flanges has a plurality of hook-shaped protruding fins, the corresponding flange, for example the flange belonging to a second basket, has the same plurality of openings for accommodating the fins. Analogously to the Venturi, a flange is fastened and can be provided with fins or openings, depending on whether the corresponding flange of the end basket is provided with openings or fins.

A reciprocal shift between the flanges is adapted to insert the hook-shaped part of the fins under the other flange at the insertion openings. In other words, after inserting the fins of a flange inside the corresponding openings of the other flange, the two flanges can be constrained by means of a reciprocal shift between the flanges. By doing so the hook-shaped part of each fin, by shifting towards the peripheral part of the corresponding insertion opening, inserts itself under the other flange thus hooking the flanges one another. In particular, the flange provided with openings is inserted at the hook-shaped part of each fin at the corresponding openings.

According to an aspect of the present invention, at least one of the surfaces facing one another of the flanges has several protruding bosses designed so as to urge the flanges in the axial sense of reciprocal removal during the reciprocal shift.

Preferably, both the surfaces facing one another of the flanges have several bosses protruding complementarily or specularly in order to urge the flanges in the axial sense of reciprocal removal during the reciprocal shift. The presence of the bosses prevents the flanges from accidentally shifting one with respect to another in a way opposite to the reciprocal shift accomplished to hook the flanges one another. Thereby the flanges are hooked rapidly and more reliably with respect to the known previous art.

In particular, the bosses are preferably arranged at the fins and respectively at the flange openings. Thereby, after introducing the fins inside the openings, the reciprocal shift between the flanges goes with an axial removal due to the presence of the bosses. Such an axial removal is however countered by the insertion of the hook-shaped part under the flange, thus allowing the flanges to be interlocked.

In a preferred embodiment, the bosses are arranged such that the reciprocal shift between the flanges allows arranging the bosses of a flange above the bosses of the other flange. In this case, the bosses are shaped so as to be complementary, i.e. when the bosses of a flange overlap the bosses of the corresponding flange, they engage one with another (the embossed part of a boss is engaged in the recessed part of the other boss) thus creating a sort of snap-fit arrangement. In other words, after introducing the fins inside the openings, the reciprocal shift between the flanges initially goes with an axial removal caused by the bosses abutting on the radially extending area of the respective flange and when the bosses overlap, the latter engage one with another and prevent the relative shift between the flanges.

In order to release the flanges one from another, there is only the need of the same reciprocal shift in opposite way between the flanges and to pull the fins of a flange out from the respective insertion openings of the corresponding flange. In order to constrain and/or release the flanges of the device according to the present invention machines or working tools are not required, all the operations can be carried out hands free easily and rapidly.

According to an advantageous aspect of the present invention, the protruding fins are preferably obtained by shearing and bending in the radially extending area of the respective flange. Thereby the implementation of the device according to the present invention is simple. Preferably, the radially extending area of the flange is sheared by a hook-shaped profile and, following the shearing, the sheared part is folded, preferably by 90°, to the outside of the flange.

According to an advantageous aspect of the present invention, one of the coupling flanges has an axial projection adapted to be inserted into the central opening of the corresponding flange, so that the two flanges are centered. Preferably the axial projection is conical or cylindrical. The axial projection allows facilitating the positioning of the flanges, that can usually be a difficult operation during the assembling of the bag-holder frame. The bag-holder frames are typically assembled vertically, by sequentially and coaxially constraining the baskets one on top of another and inserting them into the filter bag. During the assembling operations, the view for a correct positioning of the baskets is at least partially hindered by the cage-shaped frame of the upper basket. By means of the axial projection of the device according to the present invention, even if the view is partially hindered by the basket the positioning between the flanges is guided by the axial projection that, when inserted into the central opening of the corresponding flange, holds the upper basket in position. Thereby also the baskets of longer lengths (more difficult to be positioned) can be easily aligned thus allowing the insertion of the fins in the corresponding openings rapidly and easily.

According to a further aspect of the present invention, the axial projection has circular or elliptical shape in the axial section, adapted to be inserted into the central opening of the corresponding flange. The shape of the axial projection depends substantially on the basket configuration. The baskets are typically formed by a plurality of longitudinal metal wires welded around one or more rings arranged transversally to the wires. The ring can have a rounded, squared, octagonal, star-shaped, rhomboidal, rectangular shape, etc. Depending on the shape of the ring, the basket can have a substantially cylindrical or elliptical geometrical shape at whose ends flanges having circular- or elliptical-shaped axial projection can be constrained. For example, if a basket has rectangular section, flanges having elliptical axial projection able to best follow the contour drawn by metal wires will be preferably welded at the ends of the basket.

By "elliptical shape" herein a generic oval shape or a rectangular shape having two outwardly curved sides (preferably the short sides) is meant.

Similarly, the flanges having circular axial projection are preferably constrained to the ends of baskets having octagonal, star-shaped, circular section, etc., which form substantially cylindrical-shaped baskets.

According to a further aspect of the present invention, when the device is applied to cylindrical baskets, the relative shift between the flanges is an axial rotation. Thus, after inserting the fins of a flange inside the corresponding openings of the other flange, the two flanges can be constrained by means of an axial rotation between the flanges. Such a rotation allows inserting the hook-shaped part of each fin under the other flange. The rotation needed to constrain the flanges is preferably smaller than 45°, more preferably smaller than 20°. Thanks to the device according to the present invention a slight movement of the wrist is enough for carrying out a relative rotation between the flanges and constraining two baskets one another or an end basket to a Venturi, thus speeding the assembling of the bag-holder frames being in a filtering installation.

Similarly, when the device according to the present invention is applied to elliptical baskets, the relative shift between the flanges is a sliding perpendicular to the basket axis. In this case, the protruding fins of a flange are arranged and oriented such that once inserted in the corresponding openings of the other flange, the hook-shaped part of each fin can be inserted under the corresponding flange following a relative sliding between the flanges. Therefore, thanks to the present invention baskets having non circular sections, for example elliptical baskets, can be constrained simply and rapidly one another. Thanks to the elliptical shaped axial projection the flanges can be easily positioned such that the fins of a flange engage inside the corresponding openings of the other flange and once the fins are inserted, a sliding perpendicular to the basket axis (few centimeters are enough) allows constraining the flanges one another.

### Brief Description of the Drawings

Further aspects and advantages of the present invention will be clearer from the following description, made for illustration purposes only and without limitation, referring to the accompanying schematic drawings, in which:
- figure 1 is a perspective view of a bag-holder frame provided with the device according to the present invention;
- figure 2A is a top view of the flange provided with fins in an embodiment of the device according to the present invention;
- figures 2B and 2C are respectively axial sectional views according to the cut planes C-C and D-D of the flange of figure 2A;
- figure 3A is a top view of the flange provided with openings in an embodiment of the device according to the present invention;
- figures 3B and 3C are respectively axial sectional views according to the cut planes E-E and F-F of the flange of figure 3A.

### Embodiments of the invention

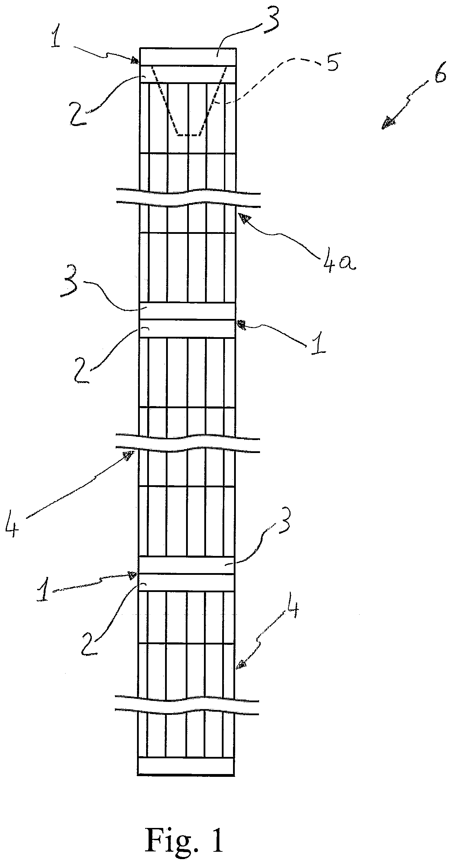

In figure 1 a bag-holder frame provided with the device 1 according to the present invention is denoted with the reference 6. In particular, the frame 6 shown in figure 1 comprises two baskets 4 and an end basket 4a connected to a Venturi 5.

The connection between the baskets 4 and between the end basket 4a and the Venturi 5 is obtained by means of a device 1 for the coaxial joining of baskets 4 for bag filters or for the coaxial joining of an end basket 4a with a Venturi 5. The device 1 according to the present invention is of the type with male-female coupling between open end flanges 2, 3, preferably having cup shape.

As previously explained, the flanges 2, 3 are fastened to the ends of the baskets 4, 4a and to an end of the Venturi 5, for example by means of welding in case the baskets and flanges, as well as the Venturi, are made in metal material.

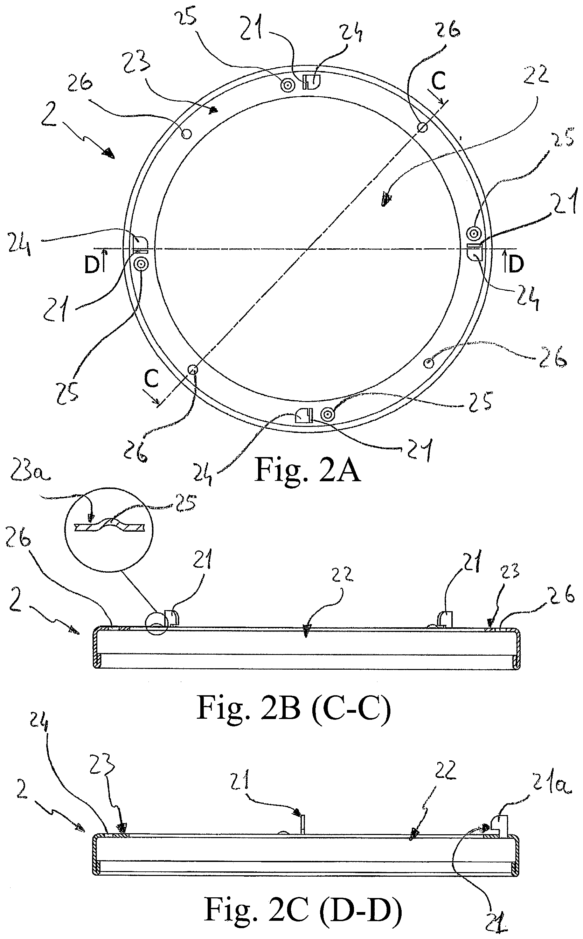

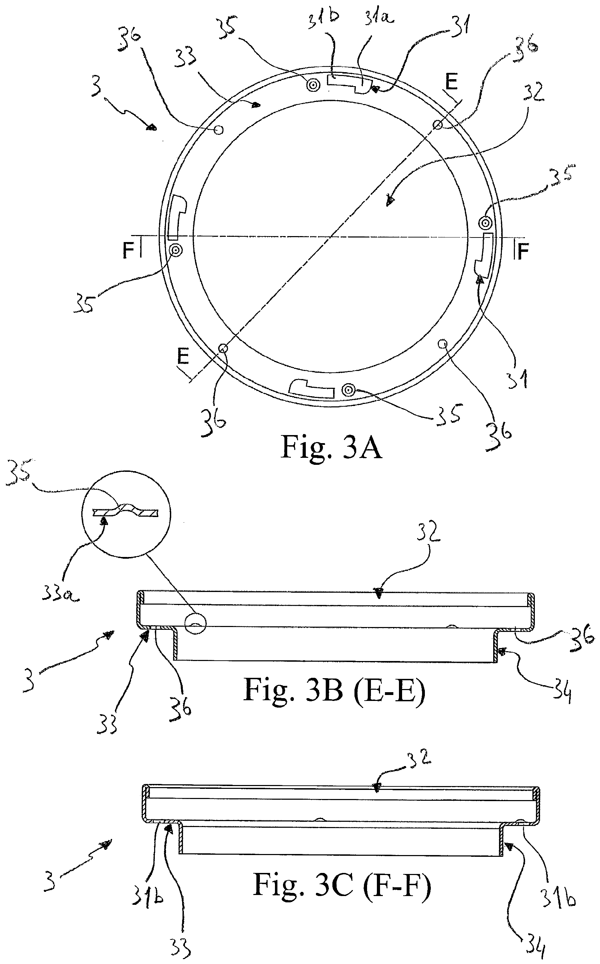

The device 1 comprises a flange 2 having a plurality of hook-shaped protruding fins 21 (visible in figures 2A-2C), and a flange 3 having the same plurality of openings 31 (visible in figures 3A-3C) for accommodating the fins 21.

The bag-holder frame 6 shown in figure 1 is assembled by arranging the flanges 3 (provided with openings 31) over the flanges 2 (provided with fins 21). Therefore in this particular embodiment shown, the baskets 4, 4a have at one end a flange 2 provided with fins 21 and at a second end a flange 3 provided with openings 31. A flange 3 provided with openings 31 is fastened to the Venturi 5.

Further embodiments are however provided wherein, by means of the device 1, the baskets 4, 4a can be constrained one another or an end basket 4a can be constrained to a Venturi 5 in a different way, for example by arranging the flanges 2 provided with fins 21 over the flanges 3 provided with openings 31 or alternating the arrangement of the flanges 2, 3 along the bag-holder frame 6. In the latter case some baskets 4, 4a will have, at their both ends, flanges 3 with openings 31 or flanges 2 with fins 21. Similarly, a flange 2 with fins 21 or a flange 3 with openings 31 can be fastened to a Venturi 5, depending on the corresponding flange fastened to the end basket 4a. In general, the joining between two baskets 4, 4a or between an end basket 4a and a Venturi 5 is achieved by means of a device 1 according to the present invention comprising a flange 2 having a plurality of fins 21 and a corresponding flange 3 having the same plurality of openings 31 for accommodating the fins 21.

In figure 2A a top view of the flange 2 is shown in a preferred embodiment of the device 1 according to the present invention. The flange 2 shown in the figures 2A-2C has circular-shaped axial section, with a central opening 22 and a radially extending area 23 provided with four fins 21 arranged at 90° one from another around the area 23. The fins 21 are obtained by shearing and folding the radially extending area 23 of the flange 2. In figures 2B and 2C the hook shape of the fins 21 is clearly shown, whereas in figure 2A the "missing" portions (having the same hook shape of the fins 21) of the area 23 are denoted with the reference 24, which are left by the fins 21 following the shearing and folding operations.

Further embodiments of the device 1 can however provide that the flange 2 has a different number of fins 21, for example larger than four (in general at least two fins 21), and/or that the fins 21 are obtained differently from shearing and folding the radially extending area 23 of the respective flange 2 (for example the fins 21 can be welded on the area 23), still remaining within the protection scope of the present invention.

Similarly, the fins 21 shown in figures 2A-2C have a hook-shaped part 21a radially oriented with respect to the axis of the basket 4, 4a. Further embodiments are however provided, wherein the hook-shaped part 21a of the fins 21 is tangentially oriented with respect to the axis of the basket 4, 4a, still remaining in the protection scope of the present invention.

The device 1 according to the present invention allows the flanges 2, 3 to be simply and rapidly constrained one another without the aid of machines or tools. In particular, a reciprocal shift between the flanges 2, 3 is adapted to insert the hook-shaped part 21 a of the fins 21 under the other flange 3 at the insertion openings 31. Therefore, upon a relative shift between the flanges 2, 3, the flange 3 is inserted between the hook-shaped part 21 a and the area 23 of the flange 2. The hook-shaped part 21a and the area 23 of the flange 2 form a substantially "C-shaped" seat.

In figure 3A a top view of the flange 3 is shown in a preferred embodiment of the device 1 according to the present invention. The flange 3 shown in figures 3A-3C, being adapted to be coupled to the flange 2 shown in figures 2A-2C, has circular-shaped axial section too, with a central opening 32 and a radially extending area 33 provided with four openings 31 arranged at 90° one from another around the area 33. The openings 31 of the flange 3 are arranged to correspond to the fins 21 of the flange 2 when the flanges 2, 3 are overlapped.

As shown in figure 3A, the geometrical shape of the openings 31 is mainly composed of two parts, a first wide part 31a that allows the introduction of the hook-shaped part 21a of the fin 21 inside the opening 31 and a second narrow part 31b where the fin 21 can engage upon a reciprocal shift between the flanges 2, 3. Preferably, the flange 3 further comprises a cylindrical axial projection 34 with circular axial section, adapted to be inserted in the central opening 22 of the flange 2, so that the two flanges 2, 3 are centered.

Such a projection 34, as explained above, is useful in the step of positioning the flanges 2, 3 to obtain a correct alignment. Further embodiments can provide the axial projection 34 being conical or frustoconical, preferably tapered towards the coupling direction between the flanges 2, 3. Once the axial projection 34 of the flange 3 has been inserted into the central opening 22 of the flange 2, the hook-shaped part 21 a is prevented from passing through the narrow part 31b of the openings 31, thus the flanges 2, 3 are aligned so that the hook-shaped part 21a of the fins 21 enters the wide part 31a of the corresponding openings 31. The narrow part 31b of the openings 31 is arch-shaped (preferably following the contour of the flange 3) such that, once the hook-shaped part 21a is inserted into the wide part 31a of the openings 31 and by axially rotating a flange with respect to the other, the fins 21 can slide inside the narrow part 31b of the openings 31. Thereby the flange 3 is constrained to the flange 2 between the hook-shaped part 21a of the fins 21 and the area 23 of the flange 2, at the openings 31.

In the embodiment shown in figures 2A-2C and 3A-3C, the flanges 2, 3 have circular axial section. Further embodiments can provide the flanges 2, 3 having elliptical axial section, for example if the baskets have prismatic shape with rectangular base. In the latter case, the cylindrical or conical axial projection 34 of the flange 3 will have elliptical axial section. In addition, differently from the embodiments wherein the baskets 4, 4a have circular axial section (such as for example the embodiment of figures 2A-2C and 3A-3C), in order to constrain the flanges 2, 3 of the device 1, the reciprocal shift between the flanges 2, 3 is a sliding perpendicular to the axis of the baskets 4, 4a.

For example the flanges 2, 3 can be designed with axial section having rectangular geometric shape, with the short sides curved outwards so as to form a substantially oval geometrical shape. In this embodiment (not shown), the fins 21 of the flange 2 and the openings 31 of the flange 3 can be shaped in the same way as described for the embodiment shown in figures 2A-2C and 3A-3C. In this case, both the fins 21 and the openings 31 are preferably arranged only along the long sides of the rectangle. Thus, once the flanges 2, 3 have been overlapped so that the hook-shaped part 21a of the fins 21 enters the wide part 31a of the openings 31, the fins 21 are made slide inside the narrow part 31b (preferably parallel to the long sides of the rectangle) of the openings 31 of the flange 3 as a consequence of a relative shift between the flanges 2, 3 that, in this case, is a sliding perpendicular to the axis of the baskets.

Referring to figures 2A-2C and 3A-3C, the surfaces 23a, 33a of the flanges 2, 3 have several protruding bosses 25, 35 intended for cooperating so as to urge the flanges 2, 3 in the axial sense of reciprocal removal during the reciprocal shift. In figures 2B and 3B, the circled part is enlarged to highlight and more clearly reveal the shape of the bosses 25, 35. The bosses 25, 35 are preferably arranged at the fins 21 and, respectively, at the openings 31 of the flanges 2, 3. Thereby, after introducing the fins 21 inside the openings 31, the reciprocal shift between the flanges 2, 3 goes with an axial removal due to the presence of the bosses 25, 35.

The bosses 25, 35 are arranged such that the reciprocal shift between the flanges 2, 3 allows arranging the bosses 35 of a flange 3 above the bosses 25 of the other flange 2. Thus the reciprocal shift between the flanges 2, 3 initially goes with an axial removal caused by the bosses 25 in abutment on the surface 33a of the radially extending area 33 of the respective flange 3. When the bosses 25 overlap on the bosses 35, they engage one with another thus preventing the relative rotation between the flanges 2, 3 (or preventing the relative sliding between the flanges 2, 3 in case of elliptical baskets). In this embodiment of the device 1, the bosses 25, 35 are shaped so as to be complementary, i.e. when the bosses of a flange are overlapped on the bosses of the corresponding flange they engage one with another and create a sort of snap-fit arrangement.

Further embodiments can however provide that the bosses 25, 35 are specularly shaped, i.e. they project one towards the other. In this case the bosses of a flange, since they overlap with the bosses of the other flange, cooperate to urge the respective flanges in the axial sense of reciprocal removal in the end part of the reciprocal shift between the flanges.

In case of specular bosses, an alternative embodiment can provide that the bosses 25 of the flange 2 and the bosses 35 of the flange 3 are spaced in a different way, respectively from the fins 21 and the openings 31. In this way the reciprocal shift between the flanges 2, 3 goes with a first axial removal caused by the bosses 25, 35 in abutment one on another and, when the bosses of a flange go beyond the bosses of the other flange, a sort of snap-fitting arrangement similar to the embodiment shown in figures 2A-2C and 3A-3C results, with the difference that at the end of the reciprocal shift the bosses are arranged next to one another.

Further embodiments can provide that only one of the surfaces 23a or 33a, respectively of the flanges 2, 3 has several protruding bosses 25 or 35 designed so as to urge the flanges 2, 3 in the axial sense of reciprocal removal during the reciprocal shift.

Referring to figures 2A-2C and 3A-3C, the flanges 2, 3 can further comprise one or more holes 26, 36 for the introduction of cotter pins or similar safety members. The holes 26 of the flange 2 and the holes 36 of the flange 3 are arranged so that, once the flanges 2, 3 are constrained, they mate for introducing a safety cotter pin between them, for example.

## Claims

1. Device (1) for the coaxial joining of baskets (4, 4a) for bag filters or for the coaxial joining of an end basket (4a) with a Venturi (5), of the type with male-female coupling between open end flanges (2, 3), wherein one of the flanges (2) has a plurality of hook-shaped protruding fins (21) and the corresponding flange (3) has the same plurality of openings (31) for accommodating said fins (21), such that a reciprocal shift between the flanges (2, 3) is adapted to insert the hook-shaped part (21a) of the fins (21) under the other flange (3) at the insertion openings (31), **characterized in that** at least one of the surfaces (23a, 33a) facing one another of the flanges (2, 3) has several protruding bosses (25, 35) designed so as to urge the flanges (2, 3) in the axial sense of reciprocal removal during said reciprocal shift.

2. Device (1) according to claim 1, **characterized in that** both the surfaces (23a, 33a) facing one another of the flanges (2, 3) have several bosses (25, 35) complementary protruding one to another.

3. Device (1) according to claim 1, **characterized in that** both the surfaces (23a, 33a) facing one another of the flanges (2, 3) have several bosses (25, 35) specularly protruding one to another.

4. Device (1) according to claim 2 or 3, **characterized in that** the bosses (25, 35) are arranged at the fins (21) and respectively at the openings (31) of the flanges (2, 3).

5. Device (1) according to one of the preceding claims, **characterized in that** one of the coupling flanges (3) has an axial projection (34) adapted to be inserted into the central opening (22) of the corresponding flange (2), so that the two flanges (2, 3) are centered.

6. Device (1) according to claim 5, **characterized in that** the axial projection (34) is conical or cylindrical.

7. Device (1) according to claim 6, **characterized in that** the axial projection (34) has a circular or elliptical shape in the axial section, adapted to be inserted into the central opening (22) of the corresponding flange (2).

8. Device (1) according to one or more of the preceding claims, **characterized in that** the protruding fins (21) are obtained by shearing and bending in the radially extending area (23) of the respective flange (2).

9. Device (1) according to one or more of the preceding claims, when applied to cylindrical baskets (4, 4a), **characterized in that** the relative shift between the flanges (2, 3) is an axial rotation.

10. Device (1) according to one or more of claims 1 to 8, when applied to elliptical baskets (4, 4a), **characterized in that** the relative shift between the flanges (2, 3) is a sliding perpendicular to the axis of the baskets.

11. Device (1) according to one or more of the preceding claims, **characterized in that** the hook-shaped parts (21a) of the fins (21) are radially oriented with respect to the axis of the basket (4, 4a).

12. Device (1) according to one or more of claims 1 to 10, **characterized in that** the hook-shaped parts (21a) of the fins (21) are tangentially oriented with respect to the axis of the basket (4, 4a).

13. Device (1) according to one or more of the preceding claims, **characterized in that** the flanges (2, 3) have one or more holes (26, 36) for the introduction of cotter pins or similar safety members.
